# FASCICULE DE BREVET EUROPEEN

(11) **EP 4 470 811 B1**
(45) Date de publication et mention de la délivrance du brevet: **18.02.2026**
(21) Numéro de dépôt: 24172183.6
(22) Date de dépôt: 24.04.2024
(51) Int. Cl.: B60J 7/12

(54) **DISPOSITIF D' OBTURATION À SANGLE(S) DE MAINTIEN POUR UN TOIT D'UN VÉHICULE AUTOMOBILE**
VORRICHTUNG ZUM VERSCHLIESSEN EINES FAHRZEUGDACHES MIT EINEM HALTEGURT
CLOSURE DEVICE WITH RETAINING STRAP(S) FOR A MOTOR VEHICLE ROOF

(30) Priorité: 30.05.2023 FR 2305336
(43) Date de publication de la demande: 04.12.2024
(73) Titulaire: Stellantis Auto SAS, 78300 Poissy (FR)
(72) Inventeur: OUBOUZID, ABDELKARIM, 14000 KENITRA (MA); DI COCCO, ENRICO, 94320 THIAIS (FR); FINOT, EMMANUEL, 92360 MEUDON LA FORET (FR); SOUILMI, AHMED, 20570 CASABLANCA (MA); EL OUARDI, SALMA, 20190 CASABLANCA (MA); IZRAR, YOUNESSE, 20570 CASABLANCA (MA)
(74) Mandataire: BCIP

(56) Documents cités:
- CH-A- 282 243
- GB-A- 945 571
- US-A- 1 883 739
- US-A1- 2018 111 458

## Description

### Domaine technique de l'invention

L'invention concerne les véhicules automobiles comprenant un toit muni d'une ouverture, et plus précisément les dispositifs d'obturation permettant l'obturation partielle ou totale de telles ouvertures.

### Etat de la technique

Certains véhicules automobiles comprennent un toit dit « ouvrant » du fait qu'il est muni d'une ouverture placée au-dessus de leur habitacle et équipée d'un dispositif d'obturation.

Le document US 2018/111458 A1 décrit un tel toit ouvrant avec un dispositif d'obturation comprenant une toile repliable.

Dans certains de ces véhicules (automobiles), le dispositif d'obturation comprend une toile repliable qui a une position d'obturation totale, dans laquelle elle obture intégralement au moins une partie prédéfinie de l'ouverture du toit, et une position d'obturation partielle, dans laquelle elle obture partiellement une sous-partie choisie de cette partie prédéfinie. Afin de maintenir la toile repliable dans son unique position d'obturation partielle (dans laquelle elle est repliée), le véhicule comprend au moins une petite lanière qui est installée dans l'habitacle, entoure la toile repliée et coopère avec un moyen de fixation situé à l'extérieur du véhicule (par exemple sur la carrosserie du toit). Généralement, le moyen de fixation est une boucle métallique munie d'une tige montée à rotation et destinée à traverser un trou traversant défini dans la petite lanière, mais il peut aussi s'agir d'un premier élément de clippage coopérant par clippage avec un second élément de clippage que comprend l'extrémité libre de la petite lanière.

Un premier inconvénient d'un tel agencement réside dans le fait que la petite lanière ne permet qu'une unique position d'obturation partielle de la toile repliable, ce qui n'est pas très pratique et surtout empêche toute position d'obturation intermédiaire, par exemple pour se protéger du soleil. Un second inconvénient d'un tel agencement réside dans le fait que, lorsque la toile repliable est dans sa position d'obturation totale, la petite lanière pend dans l'habitacle, ce qui peut générer des bruits par entrechoquement et n'est pas esthétique, et donc nuit à l'image de qualité du véhicule.

L'invention a donc notamment pour but de remédier à tout ou partie des inconvénients précités.

### Présentation de l'invention

Elle propose notamment à cet effet un dispositif d'obturation, d'une part, destiné à équiper un véhicule automobile comprenant un toit muni d'une première ouverture placée au-dessus d'un habitacle, et, d'autre part, comprenant une toile repliable ayant une position d'obturation totale, dans laquelle elle est propre à obturer intégralement au moins une partie prédéfinie de cette première ouverture en ayant une première face orientée vers l'habitacle, et au moins une position d'obturation partielle, dans laquelle elle est propre à obturer partiellement une sous-partie choisie de cette partie prédéfinie.

Ce dispositif d'obturation se caractérise par le fait que sa toile repliable comprend sur une première face, destinée à être orientée vers l'habitacle dans la position d'obturation totale, au moins une sangle ayant une longueur adaptable à une position d'obturation partielle choisie et munie d'un premier élément de couplage propre, une fois la longueur adaptée, à coopérer avec un deuxième élément de couplage, situé à l'extérieur du véhicule automobile, pour maintenir une partie repliée de la toile repliable fonction de cette position d'obturation partielle choisie.

Ainsi, l'usager peut avantageusement choisir la position d'obturation partielle de la toile repliable qui lui convient à l'instant considéré.

Le dispositif d'obturation selon l'invention peut comporter d'autres caractéristiques qui peuvent être prises séparément ou en combinaison, et notamment :
- la première face de sa toile repliable peut comprendre deux sangles parallèles entre elles ;
- il peut comprendre une pièce d'interface ayant une zone périphérique propre à être solidarisée fixement au toit autour de la première ouverture, dans laquelle est définie une seconde ouverture propre à constituer la partie prédéfinie de la première ouverture, et à laquelle est solidarisée la toile repliable ;
- en présence de la dernière option, sa pièce d'interface peut être réalisée dans un même matériau que sa toile repliable ;
- également en présence de la dernière option, il peut comprendre une fermeture à glissière, d'une part, comprenant une première bande à dents solidarisée fixement à une face extérieure de la pièce d'interface, destinée à être orientée vers l'extérieur de l'habitacle, autour de la seconde ouverture, et une seconde bande à dents solidarisée fixement à la périphérie de la toile repliable, et, d'autre part, propre à solidariser la toile repliable à la pièce d'interface soit intégralement dans la position d'obturation totale, soit partiellement dans une position d'obturation partielle ;
- également en présence de la dernière option, il peut comprendre, d'une part, au moins une première portion de bande Velcro^{®} solidarisée fixement à une face extérieure de la pièce d'interface, destinée à être orientée vers l'extérieur de l'habitacle, autour de la seconde ouverture, et, d'autre part, au moins une seconde portion de bande Velcro^{®} solidarisée fixement à la première face de la toile repliable au niveau d'un bord périphérique de la toile repliable, et complémentaire d'une première portion de bande Velcro^{®} correspondante afin de solidariser la toile repliable à la pièce d'interface soit intégralement dans la position d'obturation totale, soit partiellement dans une position d'obturation partielle ;
- chaque deuxième élément de couplage peut être solidarisé fixement à une face extérieure de la pièce d'interface qui est destinée à être orientée vers l'extérieur de l'habitacle ;
- la pièce d'interface peut comprendre une face intérieure, destinée à être orientée vers l'habitacle, et à laquelle est solidarisé fixement au moins un troisième élément de couplage propre à coopérer avec un premier élément de couplage correspondant lorsque la toile repliable est dans sa position d'obturation totale, pour maintenir la sangle correspondante sensiblement plaquée contre cette première face ;
- chaque premier élément de couplage peut constituer un élément de clippage propre à coopérer par clippage avec un autre élément de clippage constitué par un deuxième ou troisième élément de couplage.

L'invention propose également un véhicule automobile comprenant, d'une part, un toit muni d'une première ouverture placée au-dessus d'un habitacle, et, d'autre part, un dispositif d'obturation du type de celui présenté ci-avant et solidarisé fixement au toit autour de la première ouverture.

### Brève description des figures

D'autres caractéristiques et avantages de l'invention apparaîtront à l'examen de la description détaillée ci-après, et des dessins annexés, sur lesquels :

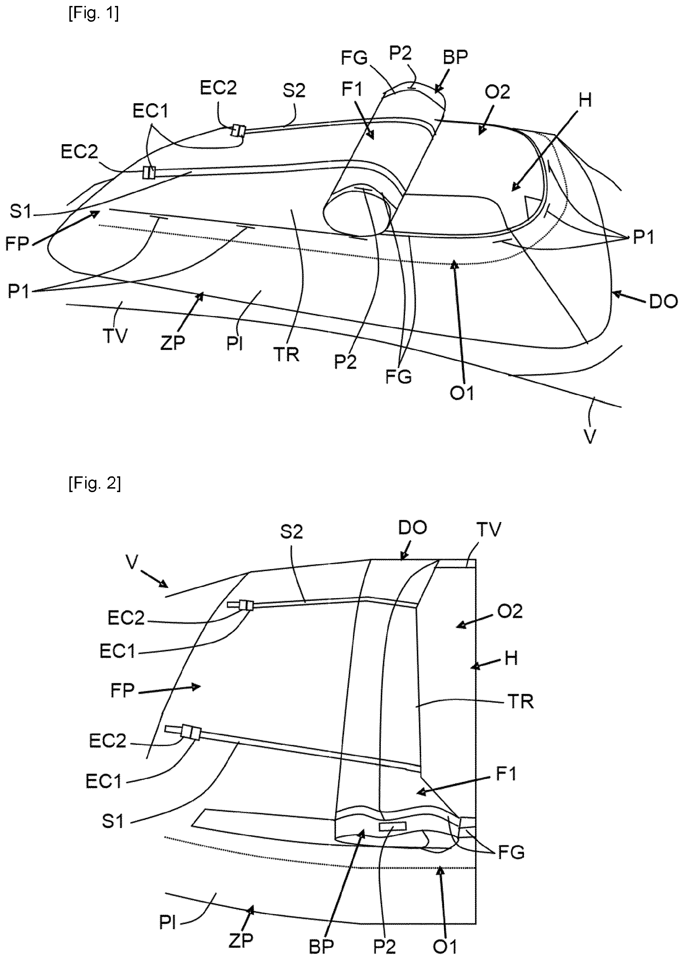

[Fig. 1] illustre schématiquement et fonctionnellement, dans une vue en perspective du dessus et du côté droit, une partie d'un exemple de toit ouvrant de véhicule automobile équipé d'un exemple de réalisation d'un dispositif d'obturation selon l'invention placé dans un premier état partiellement replié,
[Fig. 2] illustre schématiquement et fonctionnellement, dans une vue en perspective du dessus et du côté droit, la partie arrière du toit ouvrant de la figure 1, avec son dispositif d'obturation placé dans un second état partiellement replié (plus replié que le premier état partiellement replié), et

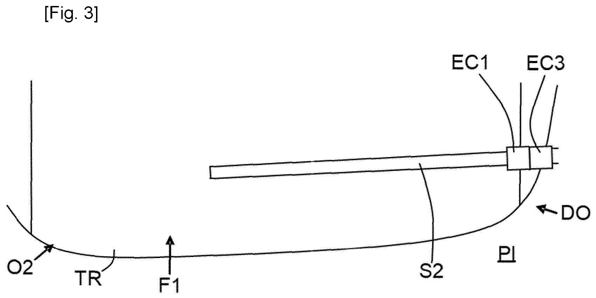

[Fig. 3] illustre schématiquement et fonctionnellement, dans une vue de dessous et du côté gauche, une portion de la partie gauche du dispositif d'obturation de la figure 1 placé dans un état d'obturation totale (ou fermé).

### Description détaillée de l'invention

L'invention a notamment pour but de proposer un dispositif d'obturation DO destiné à équiper un toit ouvrant TV d'un véhicule automobile V, et à sangle(s) de maintien Sj permettant des positions d'obturation multiples de sa toile repliable TR.

Dans ce qui suit, on considère, à titre d'exemple non limitatif, que le véhicule automobile V est une voiture. Mais l'invention n'est pas limitée à ce type de véhicule automobile. Elle concerne en effet tout véhicule automobile comprenant un toit muni d'une ouverture devant être obturée de façon contrôlable et donc constituant un toit ouvrant.

On a schématiquement illustré sur les figures 1 et 2 une partie d'un exemple de toit ouvrant TV d'un véhicule automobile V équipé d'un exemple de réalisation d'un dispositif d'obturation DO selon l'invention.

Comme illustré au moins partiellement sur les figures 1 et 2, le toit ouvrant TV comprend une première ouverture O1 qui est placée au-dessus d'un habitacle H délimité par la structure du véhicule (automobile) V, et le dispositif d'obturation DO comprend au moins une toile repliable TR ayant une position d'obturation totale et des positions d'obturation partielles qui peuvent être choisies par un usager du véhicule V.

Dans la position d'obturation totale (ou fermée), illustrée sur la figure 3, la toile repliable TR est propre à obturer intégralement au moins une partie prédéfinie de la première ouverture O1. On notera que dans cette position d'obturation totale la toile repliable TR comprend une première face F1 qui est entièrement orientée vers l'habitacle H (dans ce cas, sa seconde face, opposée à cette première face F1, est entièrement orientée vers l'extérieur.

Dans chaque position d'obturation partielle, illustrée sur la figure 1 ou 2, la toile repliable TR est propre à obturer partiellement une sous-partie choisie de la partie prédéfinie de la première ouverture O1.

Comme illustré au moins partiellement sur les figures 1 à 3, la toile repliable TR comprend sur sa première face F1 au moins une sangle (de maintien) Sj qui a une longueur adaptable et est munie d'un premier élément de couplage EC1. Ce dernier (EC1) est propre, une fois la longueur adaptée à la position d'obturation partielle choisie par l'usager, à coopérer avec un deuxième élément de couplage EC2 qui est situé à l'extérieur du véhicule V (voir figures 1 et 2). Cette coopération est destinée à maintenir une partie repliée de la toile repliable TR qui est fonction de cette position d'obturation partielle choisie.

On comprendra qu'une fois que l'usager estime qu'il a suffisamment replié la toile repliable TR, il adapte la longueur de chaque sangle Sj afin de figer l'état dans lequel il vient de placer la toile repliable TR et qui définit la position d'obturation partielle choisie.

L'utilisation de cette (ces) sangle(s) Sj à longueur adaptable permet avantageusement à l'usager de choisir la position d'obturation partielle de la toile repliable TR qui lui convient à l'instant considéré, ce qui est très pratique, par exemple pour se protéger du soleil en fonction de sa position dans le ciel.

On notera que dans l'exemple illustré non limitativement sur les figures 1 et 2 le dispositif d'obturation DO comprend sur sa première face F1 deux sangles (de maintien) S1 (j = 1) et S2 (j = 2). Mais le nombre de sangles Sj peut prendre n'importe quelle valeur supérieure ou égale à un.

On notera également que lorsque le dispositif d'obturation DO comprend sur sa première face F1 deux sangles Sj, ces dernières (Sj) sont de préférence parallèles entre elles. Mais cela n'est pas une obligation.

On notera également que chaque sangle Sj peut être légèrement élastique.

Par exemple, chaque sangle Sj peut comporter une coulisse permettant l'adaptation de sa longueur.

Egalement par exemple, et comme illustré non limitativement sur les figures 1 à 3, le dispositif d'obturation DO peut comprendre une pièce d'interface PI ayant une zone périphérique ZP qui est propre à être solidarisée fixement au toit ouvrant TV autour de la première ouverture O1. Cette pièce d'interface PI comprend une seconde ouverture O2 qui est propre à constituer la partie prédéfinie de la première ouverture O1 (devant être obturée), et à laquelle est solidarisée la toile repliable TR.

On notera que dans l'exemple illustré non limitativement sur les figures 1 et 2 la toile repliable TR fait partie intégrante de la pièce d'interface PI (et donc constitue une sous-partie de cette dernière (PI) pouvant être repliée par rapport à elle). Mais cela n'est pas une obligation. En effet, la toile repliable TR pourrait être rapportée sur la pièce d'interface PI. On notera également que la pièce d'interface PI peut éventuellement être réalisée par solidarisation entre elles d'au moins deux sous-pièces, par exemple par couture et/ou collage ou soudage.

Par exemple, cette pièce d'interface PI peut être réalisée dans un même matériau que la toile repliable TR. C'est notamment le cas, bien que non limitativement, lorsque la toile repliable TR fait partie intégrante de la pièce d'interface PI. Mais, lorsque la toile repliable TR est rapportée sur la pièce d'interface PI, elles peuvent être réalisées dans des matériaux différents.

Egalement par exemple, le matériau, commun aux pièce d'interface PI et toile repliable TR, peut être une matière plastique (ou synthétique) étanche et déformable. En variante, il pourrait s'agir d'un cuir traité, notamment de manière à être étanche.

On notera que la pièce d'interface PI peut éventuellement être solidarisée à une structure porteuse rigide qui est elle-même solidarisée fixement à la paroi du véhicule V qui définit le toit ouvrant TV.

Egalement par exemple, et comme illustré non limitativement sur les figures 1 à 3, le dispositif d'obturation DO peut comprendre une fermeture à glissière FG comprenant des première et seconde bandes à dents couplées par une navette (ou un curseur) non représenté(e) et permettant d'engrener (ou séparer) les dents. La première bande à dents est solidarisée fixement à une face extérieure FP de la pièce d'interface PI, qui est destinée à être orientée vers l'extérieur de l'habitacle H, autour de la seconde ouverture O2. La seconde bande à dents est solidarisée fixement à la périphérie de la toile repliable TR. Par ailleurs, cette fermeture à glissière FG est propre à solidariser la toile repliable TR à la pièce d'interface PI soit intégralement dans la position d'obturation totale, soit partiellement dans une position d'obturation partielle choisie.

Par exemple, cette fermeture à glissière FG peut être une Fermeture Éclair^{®}.

L'utilisation d'une fermeture à glissière FG permet non seulement d'obtenir une étanchéité aux fluides autour de la seconde ouverture O2, mais aussi d'empêcher que la toile repliable TR continue de se replier une fois qu'elle a été repliée dans une position d'obturation partielle choisie et que la longueur de chaque sangle Sj a été adaptée (ou réglée).

Egalement par exemple, et comme illustré non limitativement sur les figures 1 et 2, le dispositif d'obturation DO peut comprendre des première(s) P1 et seconde(s) P2 portions de bande Velcro^{®}. La (chaque) première portion P1 de bande Velcro^{®} est solidarisée fixement à la face extérieure FP de la pièce d'interface PI autour de la seconde ouverture O2. La (chaque) seconde portion P2 de bande Velcro^{®} est solidarisée fixement à la première face F1 au niveau d'un bord périphérique BP de la toile repliable TR. Chaque seconde portion P2 de bande Velcro^{®} est complémentaire d'une première portion P1 de bande Velcro^{®} correspondante afin de solidariser la toile repliable TR à la pièce d'interface PI soit intégralement dans la position d'obturation totale (figure 3), soit partiellement dans une position d'obturation partielle choisie (figure 1 ou 2).

On notera que dans l'exemple illustré non limitativement sur les figures 1 et 2 le dispositif d'obturation DO comprend plusieurs premières portions P1 de bande Velcro^{®} et plusieurs secondes portions P2 de bande Velcro^{®}. Mais le nombre de premières portions P1 peut prendre n'importe quelle valeur supérieure ou égale à un, et le nombre de secondes portions P2 peut prendre n'importe quelle valeur supérieure ou égale à un.

L'utilisation de première(s) P1 et seconde(s) P2 portion(s) de bande Velcro^{®} permet non seulement de bien plaquer le bord périphérique BP de la toile repliable TR contre la face extérieure FP de la pièce d'interface PI, mais aussi d'améliorer encore plus l'étanchéité aux fluides autour de la seconde ouverture O2 tout en aidant à empêcher que la toile repliable TR continue de se replier une fois qu'elle a été repliée dans une position d'obturation partielle choisie et que la longueur de chaque sangle Sj a été adaptée (ou réglée).

Egalement par exemple, et comme illustré non limitativement sur les figures 1 et 2, chaque deuxième élément de couplage EC2 peut être solidarisé fixement à la face extérieure FP de la pièce d'interface PI. Cette solidarisation fixe est de préférence réalisée après l'extrémité transversale de la toile repliable TR qui est solidarisée à la pièce d'interface PI et qui définit la limite de repliement de cette toile repliable TR. Mais cela n'est pas une obligation. En effet, chaque deuxième élément de couplage EC2 pourrait être solidarisé fixement à la seconde face (extérieure) de la toile repliable TR, à proximité de son extrémité transversale solidarisée à la pièce d'interface PI.

Egalement par exemple, chaque deuxième élément de couplage EC2 peut être solidarisé fixement à une très courte bande qui est elle-même solidarisée fixement à la face extérieure FP de la pièce d'interface PI (ou à la seconde face (extérieure) de la toile repliable TR). Dans ce cas, cette dernière solidarisation fixe peut se faire par couture et/ou collage ou soudage.

De préférence, chaque très courte bande est non élastique. Mais cela n'est pas une obligation.

Egalement par exemple, et comme illustré très schématiquement sur les figures 1 à 3, chaque premier élément de couplage EC1 peut constituer un élément de clippage qui est propre à coopérer par clippage avec un autre élément de clippage constitué par le deuxième élément de couplage EC2 correspondant. Par exemple, chaque premier élément de clippage EC1 peut être de type mâle et chaque deuxième élément de clippage EC2 peut être de type femelle, ou bien chaque premier élément de clippage EC1 peut être de type femelle et chaque deuxième élément de clippage EC2 peut être de type mâle. Mais d'autres modes de couplage peuvent être envisagés, et notamment un couplage par ancrage d'un crochet dans une boucle fermée.

Egalement par exemple, et comme illustré non limitativement sur la figure 3, la pièce d'interface PI peut comprendre une face intérieure (opposée à sa face extérieure FP et donc orientée vers l'habitacle H) à laquelle est solidarisé fixement au moins un troisième élément de couplage EC3 qui est propre à coopérer avec un premier élément de couplage EC1 correspondant lorsque la toile repliable TR est dans sa position d'obturation totale. Cela permet avantageusement de maintenir la (chaque) sangle Sj correspondante sensiblement plaquée contre la première face F1 dans la position d'obturation totale, et ainsi d'éviter la génération de bruits de claquement ou frottement.

Egalement par exemple, et comme illustré très schématiquement sur la figure 3, lorsque chaque premier élément de couplage EC1 constitue un élément de clippage, chaque troisième élément de couplage EC3 correspondant est un autre élément de clippage.

Egalement par exemple, chaque troisième élément de couplage EC3 peut être solidarisé fixement à une très courte bande qui est elle-même solidarisée fixement à la face intérieure de la pièce d'interface PI. Dans ce cas, cette dernière solidarisation fixe peut se faire par couture et/ou collage ou soudage.

De préférence, chaque très courte bande est non élastique. Mais cela n'est pas une obligation.

Par ailleurs, chaque très courte bande peut être solidarisée fixement à la face intérieure de la pièce d'interface PI à l'opposé de l'extrémité transversale de la toile repliable TR qui est solidarisée à la pièce d'interface PI et qui définit la limite de repliement de cette toile repliable TR.

## Revendications

1. Dispositif d'obturation (DO) pour un véhicule automobile (V) comprenant un toit (TV) muni d'une première ouverture (O1) placée au-dessus d'un habitacle (H), ledit dispositif d'obturation (DO) comprenant une toile repliable (TR) ayant une position d'obturation totale, dans laquelle elle est propre à obturer intégralement au moins une partie prédéfinie de ladite première ouverture (O1) en ayant une première face (F1) orientée vers ledit habitacle (H), et au moins une position d'obturation partielle, dans laquelle elle est propre à obturer partiellement une sous-partie choisie de ladite partie prédéfinie, ladite toile repliable (TR) comprenant sur ladite première face (F1) au moins une sangle (Sj) **caractérisé en ce que** ladite sangle a une longueur adaptable à une position d'obturation partielle choisie et **en ce que** ladite sangle est munie d'un premier élément de couplage (EC1) propre, une fois ladite longueur adaptée, à coopérer avec un deuxième élément de couplage (EC2), situé à l'extérieur dudit véhicule automobile (V), pour maintenir une partie repliée de ladite toile repliable (TR) fonction de cette position d'obturation partielle choisie.

2. Dispositif d'obturation selon la revendication 1, **caractérisé en ce que** ladite première face (F1) comprend deux sangles (Sj) parallèles entre elles.

3. Dispositif d'obturation selon la revendication 1 ou 2, **caractérisé en ce qu'**il comprend une pièce d'interface (PI) ayant une zone périphérique (ZP) propre à être solidarisée fixement audit toit (TV) autour de ladite première ouverture (O1), dans laquelle est définie une seconde ouverture (O2) propre à constituer ladite partie prédéfinie de la première ouverture (O1), et à laquelle est solidarisée ladite toile repliable (TR).

4. Dispositif d'obturation selon la revendication 3, **caractérisé en ce que** ladite pièce d'interface (PI) est réalisée dans un même matériau que ladite toile repliable (TR).

5. Dispositif d'obturation selon la revendication 3 ou 4, **caractérisé en ce qu'**il comprend une fermeture à glissière (FG), d'une part, comprenant i) une première bande à dents solidarisée fixement à une face extérieure (FP) de ladite pièce d'interface (PI), destinée à être orientée vers l'extérieur dudit habitacle (H), autour de ladite seconde ouverture (O2), et ii) une seconde bande à dents solidarisée fixement à la périphérie de ladite toile repliable (TR), et, d'autre part, propre à solidariser ladite toile repliable (TR) à ladite pièce d'interface (PI) soit intégralement dans ladite position d'obturation totale, soit partiellement dans une position d'obturation partielle.

6. Dispositif d'obturation selon l'une des revendications 3 à 5, **caractérisé en ce qu'**il comprend i) au moins une première portion de bande Velcro^{®} solidarisée fixement à une face extérieure (FP) de ladite pièce d'interface (PI), destinée à être orientée vers l'extérieur dudit habitacle (H), autour de ladite seconde ouverture (O2), et ii) au moins une seconde portion (P2) de bande Velcro^{®} solidarisée fixement à ladite première face (F1) au niveau d'un bord périphérique (BP) de ladite toile repliable (TR), et complémentaire d'une première portion de bande Velcro^{®} correspondante afin de solidariser ladite toile repliable (TR) à ladite pièce d'interface (PI) soit intégralement dans ladite position d'obturation totale, soit partiellement dans une position d'obturation partielle.

7. Dispositif d'obturation selon l'une des revendications 3 à 6, **caractérisé en ce que** chaque deuxième élément de couplage (EC2) est solidarisé fixement à une face extérieure (FP) de ladite pièce d'interface (PI) destinée à être orientée vers l'extérieur dudit habitacle (H).

8. Dispositif d'obturation selon l'une des revendications 3 à 7, **caractérisé en ce que** ladite pièce d'interface (PI) comprend une face intérieure destinée à être orientée vers ledit habitacle (H) et à laquelle est solidarisé fixement au moins un troisième élément de couplage (EC3) propre à coopérer avec un premier élément de couplage (EC1) correspondant lorsque ladite toile repliable (TR) est dans sa position d'obturation totale, pour maintenir ladite sangle (Sj) correspondante sensiblement plaquée contre ladite première face (F1).

9. Dispositif d'obturation selon l'une des revendications 1 à 8, **caractérisé en ce que** chaque premier élément de couplage (EC1) constitue un élément de clippage propre à coopérer par clippage avec un autre élément de clippage constitué par un deuxième élément de couplage (EC2).

10. Véhicule automobile (V) comprenant un toit (TV) muni d'une première ouverture (O1) placée au-dessus d'un habitacle (H), **caractérisé en ce qu'**il comprend en outre un dispositif d'obturation (DO) selon l'une des revendications 1 à 9, solidarisé fixement audit toit (TV) autour de ladite première ouverture (O1).

## Patentansprüche

1. Verschlussvorrichtung (DO) für ein Kraftfahrzeug (V) mit einem Dach (TV), das mit einer ersten Öffnung (O1) versehen ist, die über einem Fahrgastraum (H) angeordnet ist, wobei die Verschlussvorrichtung (DO) ein zusammenfaltbares Tuch (TR) mit einer Gesamtverschlussposition umfasst, in der sie geeignet ist, wenigstens einen vorbestimmten Teil der ersten Öffnung (O1) vollständig zu verschließen, indem sie eine erste Fläche (F1), die dem Fahrgastraum (H) zugewandt ist, und wenigstens eine teilweise Verschlussposition aufweist, in der sie geeignet ist, einen Teil zu verschließen Ausgewählter Unterabschnitt des vorbestimmten Teils, wobei das faltbare Tuch (TR) auf der ersten Seite (F1) mindestens einen Gurt (Sj) aufweist, **dadurch gekennzeichnet, dass** der Gurt eine Länge aufweist, die an eine ausgewählte partielle Verschlussposition angepasst werden kann, und dass der Gurt mit einem ersten Koppelelement (EC1) versehen ist, das, wenn die Länge angepasst ist, geeignet ist, mit einem zweiten Koppelelement (EC2) zusammenzuwirken, das sich außerhalb des Kraftfahrzeugs (V) befindet, um einen gefalteten Abschnitt des faltbaren Tuchs (TR) in Abhängigkeit von dieser ausgewählten partiellen Verschlussposition zu halten.

2. Verschlussvorrichtung nach Anspruch 1, **dadurch gekennzeichnet, dass** die erste Fläche (F1) zwei zueinander parallele Gurte (Sj) aufweist.

3. Verschlussvorrichtung nach Anspruch 1 oder 2, **dadurch gekennzeichnet, dass** sie ein Schnittstellenteil (PI) umfasst, das eine Umfangszone (ZP) aufweist, die geeignet ist, um fest mit dem Dach (TV) um die erste Öffnung (O1) herum verbunden zu werden, wobei eine zweite Öffnung (O2) definiert ist, die geeignet ist, den vorbestimmten Teil der ersten Öffnung (O1) zu bilden, und mit der das faltbare Gewebe (TR) fest verbunden ist.

4. Verschlussvorrichtung nach Anspruch 3, **dadurch gekennzeichnet, dass** das Zwischenstück (PI) aus demselben Material wie das faltbare Gewebe (TR) hergestellt ist.

5. Verschlussvorrichtung nach Anspruch 3 oder 4, **dadurch gekennzeichnet, dass** sie einen Reißverschluss (FG) umfasst, der zum einen i) einen ersten Zahnstreifen, der fest mit einer Außenfläche (FP) des Schnittstellenteils (PI) verbunden ist, zum Ausrichten nach außen des Fahrgastraums (H) um die zweite Öffnung (O2) umfasst, und ii) einen zweiten Zahnstreifen, der fest mit dem Umfang des faltbaren Gewebes (TR) verbunden ist, und zum anderen zum Befestigen des faltbaren Gewebes (TR) an dem Schnittstellenteil geeignet ist (PI) entweder vollständig in der vollständig oder teilweise in einer teilweise verschlossenen Position.

6. Verschlussvorrichtung nach einem der Ansprüche 3 bis 5, **dadurch gekennzeichnet, dass** sie i) mindestens einen ersten Abschnitt des Velcro^{®}-Bandes, der fest mit einer Außenfläche (FP) des Schnittstellenteils (PI) verbunden ist, der dazu bestimmt ist, um die zweite Öffnung (O2) herum nach außen gerichtet zu sein, und ii) mindestens einen zweiten Abschnitt (P2) des Velcro^{®}-Bandes umfasst, der fest mit der ersten Fläche (F1) an einem Umfangsrand (BP) des faltbaren Gewebes (TR) verbunden ist und zu einem ersten Abschnitt des Bandes komplementär ist Entsprechendes Velcro^{®}, um das faltbare Gewebe (TR) entweder vollständig in der vollständig verschlossenen Stellung oder teilweise in einer teilweise verschlossenen Stellung mit dem Schnittstellenteil (PI) zu verbinden.

7. Verschlussvorrichtung nach einem der Ansprüche 3 bis 6, **dadurch gekennzeichnet, dass** jedes zweite Kopplungselement (EC2) fest mit einer Außenfläche (FP) des Schnittstellenteils (PI) verbunden ist, die dazu bestimmt ist, nach außen des Fahrgastraums (H) gerichtet zu sein.

8. Verschlussvorrichtung nach einem der Ansprüche 3 bis 7, **dadurch gekennzeichnet, dass** das Schnittstellenteil (PI) eine Innenfläche umfasst, die dazu bestimmt ist, dem Fahrgastraum (H) zugewandt zu sein, und an der mindestens ein drittes Kopplungselement (EC3) fest befestigt ist, das dazu geeignet ist, mit einem entsprechenden ersten Kopplungselement (EC1) zusammenzuwirken, wenn sich das zusammenfaltbare Gewebe (TR) in seiner totalen Verschlussposition befindet, um den entsprechenden Gurt (Sj) im Wesentlichen gegen die erste Fläche (F1) gedrückt zu halten.

9. Verschlussvorrichtung nach einem der Ansprüche 1 bis 8, **dadurch gekennzeichnet, dass** jedes erste Koppelelement (EC1) ein Klemmelement bildet, das geeignet ist, durch Klemmen mit einem anderen Klemmelement zusammenzuwirken, das aus einem zweiten Koppelelement (EC2) besteht.

10. Kraftfahrzeug (V), das ein Dach (TV) umfasst, das mit einer ersten Öffnung (O1) versehen ist, die über einem Fahrgastraum (H) angeordnet ist, **dadurch gekennzeichnet, dass** es außerdem eine Verschlussvorrichtung (DO) nach einem der Ansprüche 1 bis 9 umfasst, die fest mit dem Dach (TV) um die erste Öffnung (O1) herum verbunden ist.

## Claims

1. A closure device for a motor vehicle comprising a roof provided with a first opening placed above a passenger compartment, said closure device comprising a folding cloth having a total closure position in which it is adapted to completely close off at least a predefined portion of said first opening by having a first face orientated towards said passenger compartment, and at least one partial closure position in which it is adapted to partially close off a selected sub-portion of said predefined portion, said folding cloth comprising on said first face, at least one strap, wherein said strap has a length adaptable to a selected partial closure position and wherein said strap is provided with a first coupling item (EC 1) adapted, once said length is adapted, to cooperate with a second coupling item (EC 2), located outside said motor vehicle (V), to hold a folded part of said folding cloth (TR) as a function of this selected partial shutter position.

2. The sealing device as claimed in claim 1, wherein said first face (F1) comprises two straps (Sj) parallel to each other.

3. The sealing device as claimed in claim 1 or 2, further comprising an interface component having a peripheral zone adapted to be fixedly attached to said roof around said first opening,
wherein a second opening is defined to constitute said predefined portion of said first opening, and to which said folding cloth is fixedly attached.

4. The sealing device as claimed in claim 3, wherein said interface component is realised of the same material as said folding cloth.

5. Sealing device according to Claim 3 or 4, **characterised in that** it comprises a zipper (FG), on the one hand, comprising i) a first toothed strip fixedly attached to an outer face (FP) of said interface component (PI), intended to be orientated towards the outside of said passenger compartment (H), around said second opening (O 2), and ii) a second toothed strip fixedly attached to the periphery of said folding cloth (TR), and, on the other hand, capable of securing said folding cloth (TR) to said interface component (PI) either integrally in said total sealing position, or partially in a partial sealing position.

6. Sealing device according to one of Claims 3 to 5, **characterised in that** it comprises i) at least one first portion of Velcro^{®} strip fixedly attached to an outer face (FP) of said interface component (PI), intended to be orientated towards the outside of said passenger compartment (H), around said second opening (02), and ii) at least one second portion (P2) of Velcro^{®} strip fixedly attached to said first face (F1) at the level of a peripheral edge (BP) of said folding fabric (TR), and complementary to a corresponding first portion of Velcro^{®} strip in order to fixedly attach said folding fabric (TR) to said interface component (PI) either entirely in said total sealing position, or partially in a partial sealing position.

7. Shutter device according to one of Claims 3 to 6, wherein each second coupling item (EC2) is fixedly attached to an outer face (FP) of said interface component (PI) intended to be orientated towards the outside of said passenger compartment (H).

8. Closure device according to one of Claims 3 to 7, **characterised in that** said interface component (PI) comprises an inner face intended to be orientated towards said passenger compartment (H) and to which is fixedly attached at least one third coupling item (EC3) capable of cooperating with a corresponding first coupling item (EC1) when said folding cloth (TR) is in its total closure position, in order to keep said corresponding strap (Sj) substantially pressed against said first face (F1).

9. Shutter device according to one of Claims 1 to 8, wherein each first coupling item (EC1) constitutes a clipping item adapted to cooperate by clipping with another clipping item constituted by a second coupling item (EC2).

10. Motor vehicle (V) comprising a roof (TV) provided with a first opening (O1) placed above a passenger compartment (H), **characterised in that** it further comprises a closure device (DO) according to one of Claims 1 to 9, fixedly attached to said roof (TV) around said first opening (O1).
